# EUROPEAN PATENT APPLICATION

(11) **EP 3 103 708 A1**
(43) Date of publication of application: **14.12.2016**
(21) Application number: 15171329.4
(22) Date of filing: 10.06.2015
(51) Int. Cl.: B62D 55/065, B60P 1/02, B60B 19/00, B62D 55/26

(54) **OMNIDIRECTIONAL MOVING DEVICE AND OMNIDIRECTIONAL TREADING SYSTEM INCORPORATED IN SUCH DEVICE**

(71) Applicant: General Electric Technology GmbH, 5400 Baden (CH)
(72) Inventor: Carrasco, Edgar, 4142 Münchenstein (CH)
(74) Representative: General Electric Technology GmbH

(57) **Abstract**

Omnidirectional moving device (100) and system (10) are provided. The device (100) includes a chassis member (110), at least a pair of treading members (120) and a wheel arrangement (140). The chassis member (110) may be disposed between the pair of treading members (120). Each of the treading members (120) can move in same or opposite directions. The wheel arrangement (140) may perpendicularly be coupled to the chassis (110) between the treading members (120). The wheel arrangement (140), independently/dependently, with the treading members (120), may enable the device (100) to be moved in a first direction (D1). Each of the treading members (120), when moving in same direction, may enable the wheel arrangement (140) to move in the same direction as thereof so as to enable the device to be moved in a second direction (D2); and when adapted to be moved in opposite directions, enables the wheel arrangement (140) to swings at a position thereof to enable the device (100) to be moved in a third direction (D3).

## Description

### BACKGROUND

### Field of Endeavor

The present disclosure relates generally to moving devices or robotic vehicles and, more particularly, to an omnidirectional moving device or robotic vehicles or omnidirectional treading system that may be incorporated in robotic vehicles enabling thereto to move omnidirectionally, which may be utilized, but not limited to, in applications, such as, inspection, transportation etc.

### Brief Description of the Related Art

Robotic vehicles have been successfully utilized in various applications, such as inspection, transportation and the like. In spite of all of that, it has always been challenge to accelerate such vehicles in varying requirements. Conventional robotic vehicles may have the capability of accommodating lateral and transverse movements making it suitable of desired purposes on plain surfaces.

However, it has always been a challenge for such vehicles to change its direction while simultaneously retaining its movement, and that to on curved surfaces. Accordingly, there exists a need for moving devices which precludes the foregoing disadvantages.

### SUMMARY

The present disclosure discloses an omnidirectional treading system or omnidirectional moving device or robotic vehicle having such system that will be presented in the following simplified summary to provide a basic understanding of one or more aspects of the disclosure that are intended to overcome the discussed drawbacks, but to include all advantages thereof, along with providing some additional advantages. This summary is not an extensive overview of the disclosure. It is intended to neither identify key or critical elements of the disclosure, nor to delineate the scope of the present disclosure. Rather, the sole purpose of this summary is to present some concepts of the disclosure, its aspects and advantages in a simplified form as a prelude to the more detailed description that is presented hereinafter.

A general object of the present discloser is to provide an omnidirectional moving device or robotic vehicles that may be capable altering its direction while simultaneously retaining its movement irrespective of surface designs, such as, curved, plane, inclined etc.

In one aspect of the present disclosure, an omnidirectional moving device is provided. The device may include a chassis member, at least a pair of treading members and a wheel arrangement. In an embodiment, each of the pair of treading members and the wheel arrangement may be motor operated. The chassis member is may be disposed between the at least a pair of treading members. Specifically, the pair of treading members may be disposed parallel in spaced-apart manner carrying the chassis member therebetween. Each of the treading members may be adapted to be moved in same or opposite direction. Further, the wheel arrangement may be coupled to the chassis between the pair of treading members in perpendicular relation to the pair of treading members. The wheel arrangement, independently or dependently, with the pair of treading members, may enable the omnidirectional moving device to be moved in a first direction 'D1.' Further, each of the treading members when moving in same direction may enable the wheel arrangement to move in the same direction as thereof so as to enable the omnidirectional moving device to be moved in a second direction 'D2.' Furthermore, each of the treading members when adapted to be moved in opposite directions, the wheel arrangement swings at a position thereof so as to enable the omnidirectional moving device to be moved in a third direction 'D3,' while the omnidirectional moving device may simultaneously moving in the first 'D1' or second 'D2' direction.'

In one embodiment, each of the treading members may include a pair of pinion members and a belt member. The pair of pinion members is spaced-apartly disposed from each other. Each pinion member may include a plurality of protruding elements in which each has an interacting member. Each of the plurality of protruding elements diverges from a rotational axis of the pinion member to configure a semi-arced shape having first and second ends. Each of the first and second ends includes the interacting member. Each of the plurality of protruding elements with the semi-arced shape combines to form the pinion members having a U-shaped groove in which the belt member is disposed.

The belt member is disposed over the spaced apart pinion members and adapted to rotate with the rotation of the pair of pinion members. The belt member includes a plurality of rollers and a plurality of engaging members configured such that each of the engaging members is disposed between the two rollers transversely to axes thereof. Each engaging member includes a complementary interacting member to engage with the interacting member. Specifically, each of the engaging members includes two distal ends, each having the complementary interacting member to engage with the respective interacting member so as to restrict the belt member movement over the pair of pinion members.

In an embodiment, an extension member may be disposed between the two rollers along the axis of the rotation thereof to support the engaging member disposed between the two rollers thereon.

In an embodiment, the wheel arrangement includes a plurality of smaller wheel members may be disposed along periphery of the wheel arrangement such that axes of the rotations of each of the smaller wheel members is transversal to the axis of the rotation of the wheel arrangement.

In an embodiment, the omnidirectional moving device may include a pair of treading members disposed parallel in spaced-apart manner carrying the chassis member therebetween. The pair of treading members may be disposed perpendicular to the pair of treading member. Each of the pair of treading members may be motor operated and adapted to be moved in same or opposite direction.

In another aspect of the present disclosure, an omnidirectional treading system is provided. Such treading system may be incorporated to make vehicles as disclosed above. Such treading system may include at least a pair of treading members and a wheel arrangement. The pair of treading members may be disposed parallel in spaced-apart manner. Each of the treading members may adapt to be moved in same or opposite direction. Each of the treading members may include a pair of pinion members and a belt member. The pair of pinion members spaced-apartly disposed from each other. Each of the pinion members may include a plurality of protruding elements in which each has an interacting member. Further, the belt member may be disposed over the spaced apart pinion members and adapted to rotate with the rotation of the pair of pinion members. The belt member may include a plurality of rollers and a plurality of engaging members configured such that each of the engaging members may be disposed between the two rollers transversely to axes thereof. Each engaging member may include a complementary interacting member to engage with the interacting member so as to restrict the belt member movement over the pair of pinion members. Further, the wheel arrangement may be disposed between the pair of treading members in perpendicular relation to the pair of treading members. The wheel arrangement, independently or dependently with the pair of treading members, enables a movement in a first direction 'D1.' Furthermore, each of the treading members when moving in same direction enables the wheel arrangement to move in the same direction as thereof, so as to enable a movement in a second direction 'D2.' Moreover, Each of the treading members when adapted to be moved in opposite directions, the wheel arrangement swings at a position thereof so as to enable a movement in a third direction 'D3,' while simultaneously moving in the first 'D1' or second 'D2' direction.

These together with the other aspects of the present disclosure, along with the various features of novelty that characterize the present disclosure, are pointed out with particularity in the present disclosure. For a better understanding of the present disclosure, its operating advantages, and its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will better understood with reference to the following detailed description and claims taken in conjunction with the accompanying drawing, wherein like elements are identified with like symbols, and in which:
FIG. 1 illustrates a perspective view of an omnidirectional moving device, in accordance with embodiment of the present disclosure;
FIG. 2. Illustrates an enlarged view of an encircled portion of the omnidirectional moving device of FIG. 1, in accordance with additional embodiment of the present disclosure; and
FIG. 3 illustrates a perspective block diagram of an omnidirectional moving device, in accordance with an additional embodiment of the present disclosure.

Like reference numerals refer to like parts throughout the description of several views of the drawings.

### DETAILED DESCRIPTION OF EXEMPLARY EMBODIMENTS

For a thorough understanding of the present disclosure, reference is to be made to the following detailed description, including the appended claims, in connection with the above-described drawings. In the following description, for purposes of explanation, numerous specific details are set forth in order to provide a thorough understanding of the present disclosure. It will be apparent, however, to one skilled in the art that the present disclosure can be practiced without these specific details. In other instances, structures and devices are shown in block diagrams form only, in order to avoid obscuring the disclosure. Reference in this specification to "one embodiment," "an embodiment," "another embodiment," "various embodiments," means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but may not be of other embodiment's requirement.

Although the following description contains many specifics for the purposes of illustration, anyone skilled in the art will appreciate that many variations and/or alterations to these details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure. Further, the relative terms used herein do not denote any order, elevation or importance, but rather are used to distinguish one element from another. Further, the terms "a," "an," and "plurality" herein do not denote a limitation of quantity, but rather denote the presence of at least one of the referenced item.

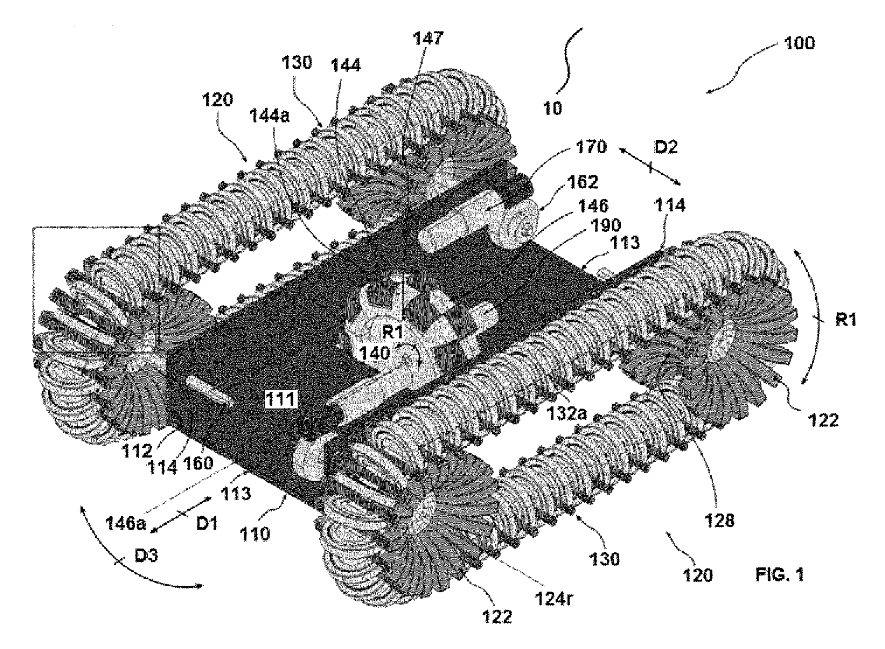

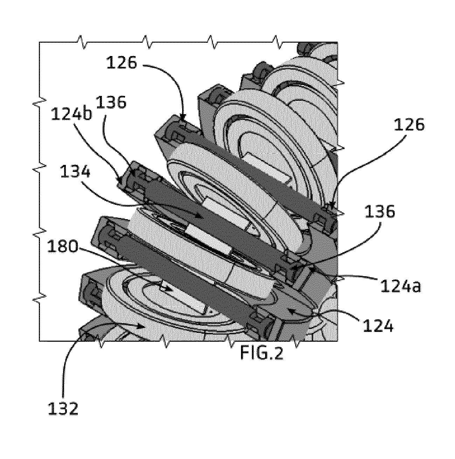

Referring to FIGS. 1 and 2, an omnidirectional moving device 100 (hereinafter referred to as 'device 100') is depicted in accordance with an exemplary embodiment of the present disclosure. The device 100 may be configured by incorporating an omnidirectional moving system 10 that includes at least a pair of treading members 120 and a wheel arrangement 140. The treading system 10 will be described in relation to its components, i.e. with the at least a pair of treading members 120 and with the wheel arrangement 140 incorporated to configure the device 100. As depicted, the device 100 may include a chassis member 110, the at least a pair of treading members 120 and the wheel arrangement 140 configured in an operating relationship to each other. Various example descriptions of the device 100 will be made in details herein in relation to FIGS. 1 to 2.

The chassis member 110, in an example as depicted in FIGS. 1 and 2, may include a platform 111 defining opposite parallel sides 112, 113 and protrusions 114 extending upright from peripheries of the sides 112. The chassis member 110 is adapted to be disposed between the spaced-apart parallel treading members 120.

In an embodiment, each of the treading member 120 includes a pair of pinion members 122 and a belt member 130 disposed along the pinion member 122. The pinion members are spaced-apartly disposed from each other and each of which includes a plurality of protruding elements 124. In an example arrangement, the chassis member 110 may be connected to each of the treading member 120 along the pinion members 122 via connecting members 160 passing across the protrusions 114 of the chassis member110. Each of the protruding elements 124 may include an interacting member 126. In an embodiment, each of the protruding elements 124 may include a specific configuration, such as depicted in FIG. 1. In such embodiment, each protruding element 124 may diverge away from a rotational axis 124r of the pinion member 122 so as to configure a semi-arced shape profile having first 124a and second 124b ends. Each of the first and second ends124a, 124b includes the interacting member 126 configured thereon. The protruding elements 124 with the semi-arced shape profile combines to form the pinion members 122 with a U-shaped groove 128 in which the belt member 130 is disposed.

The belt member 130 is disposed in the U-shaped groove 128 of the spaced apart pinion members 122 and adapted to rotate with the rotation of the pair of pinion members 122. The belt member 130 includes a plurality of rollers 132 and a plurality of engaging members 134 configured such that each of the engaging member 134 is disposed between the two rollers 132 transversely to axes 132a of each of the rollers 132. Each engaging member 134 includes a complementary interacting member 136 to engage with the interacting member 126 so as to restrict the movement of the belt member 130 over the pair of pinion members 122. In an embodiment, as can be clearly seen in FIG. 2, an extension member 180 may be disposed between the two rollers 132 along the axes 132a of the roller, also at which the rollers 132 rotate. Among other uses, the extension member 180 may support the engaging member 134 disposed between the two rollers 132 thereon. In an embodiment, the extension member 180 may be made of a continuous flexible material, which passes through holes in the elements 132 and 134. Further, the other related elements may be fixed on the extension member 180. Furthermore, the flexibility of the extension member 180 is mainly along the direction 132a. In another embodiment, the extension member 180 may be made using a rigid material that may be a link system to join elements 132 and 134. In such case, the extension member 180 may not be one continuous element.

The interacting member 126 and the complementary interacting member 136 supports each other and provides a mechanical interaction with each other so as to not affect the movement of the belt member 130 on the pinion members 122 and also avoid contact with the rollers 132. In this way rollers are free to rotate providing the degree of freedom for a lateral movements, such as in directions D1, D2, and D3, explained herein later.

In an example arrangement, each of the pair of treading members 120 may be motor operated. Such each motor operated treading member 120 may include a motor 170 attached to the treading member 120 via one of a worm gear 162 or directly in the same axis joint with an axis coupling. Motors 170 provide freedom of operation to the treading members 120 so as to enable the movement thereof in same or opposite direction at same time, depending upon the requirement.

Further, the wheel arrangement 140 is coupled to the chassis 110 between the pair of treading members 120 in perpendicular relation to the pair of treading members 120. The wheel arrangement 140, independently or dependently, with the pair of treading members 120, enables the omnidirectional moving device 100 to be moved. In an embodiment, the wheel arrangement 140 may include a bigger wheel 146 and a plurality of smaller wheel members 144 disposed along periphery of the bigger wheel 146 such that axes 144a of the rotations of each of the smaller wheel members 144 is transversal to the axis 146a of the rotation of the bigger wheel 146 or the wheel arrangement 140. In an example arrangement, the bigger wheel 146 includes slots 147 in spaced manner which rotatingly incorporates the smaller wheels 144 so as the axes 144a of each smaller wheel 144 is transversal to the axis 146a of the bigger wheel. In an embodiment, the wheel arrangement 140 may also be motor operated and may include a motor 190 for the said purpose.

In operation as per the device 100 shown in FIGS. 1 and 2, the wheel arrangement 140, independently or dependently, with the pair of treading members 120, enables the omnidirectional moving device 100 to be moved in a first direction 'D1.' For example, if the wheel arrangement 140 is rotated in 'R1' direction along the axis 146a, the rollers also rotate in R1 direction along the axes 132a, enabling the device 100 to move in the direction 'D1.' The first direction 'D1' may be to-and-fro movement of the device 100. Further, each of the treading members 120 when moving in same direction, such as 'R2,' along pinions 122 that enables the wheel arrangement 140 via the smaller wheels 144 (rotates along the axes 146a) to move in the same direction as of 'R2' so as to enable the omnidirectional moving device 100 to be moved in a second direction 'D2.' The second direction 'D2' may be back-and-forth movement, transversal to the to-and-fro movement of the device 100 in the first direction 'D1.' Furthermore, when both of the treading members 120 adapted to be moved in opposite directions, such as 'R2,' the wheel arrangement 140 swings at a position thereof so as to enable the omnidirectional moving device 100 to be moved in a third direction 'D3,' while the omnidirectional moving device 100 is simultaneously moving in the first 'D1' or second 'D2' direction.' The third direction 'D3' may be swing clockwise-anticlockwise movement.

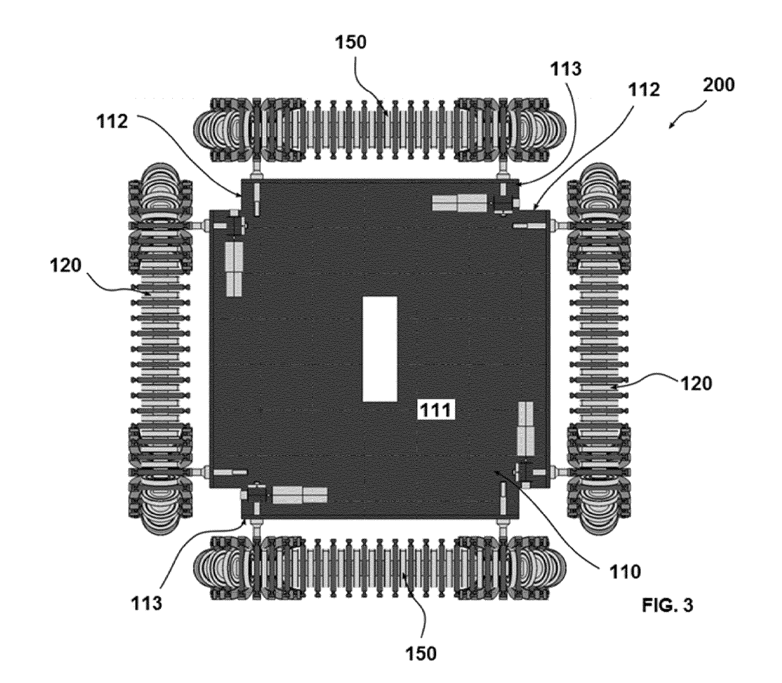

In an additional embodiment, an omnidirectional moving device 200 (device 200) is provided and illustrated in FIG. 3. FIG. 3 illustrates a perspective block diagram of the device 200, in accordance with an additional embodiment of the present disclosure. In such example additional embodiment, the device 200 is similar to the construction of the device 100 with an additional pair of treading members 150 along with the treading member 120. The additional pair of treading members 150 is adapted to be disposed perpendicular to the pair of treading member 120. Similar to the treading members 120, the pair of treading members 150 are disposed parallel in spaced-apart manner along the side 113 of the chassis 110 perpendicular to the treading members 120 that are disposed along the sides 112 of the chassis. In such embodiment, the device 200, may or may not include the wheel arrangement 140 as shown in FIG. 1 per the first embodiment of the disclosure. In this embodiment, treading members 120 and 150 enables carrying of the chassis member 110 so as to carry the device 200 in desired direction, i.e. D1 or D2 or D3. As said above, herein too, each of the pair of treading members 150 may or may not be motor operated and adapted to be moved in same or opposite direction as similar to the treading members 120 to obtain said purpose as above and for the sake of brevity the reparation is excluded therein.

The device 100 or 200 of the present disclosure is advantageous in various scopes such as described above. The device is omnidirectional and may be capable moving in all the possible direction on a surface to which it is adapted to be moved. The device is capable of altering its direction while simultaneously retaining its movement irrespective in any other direction. Furthermore, the belt member gives the device a flexibility to move on any surface designs, such as, curved, plane, inclined etc. Mechanical interaction between the interacting member and the complementary interacting member supports each other and facilitates the movement of the belt member 130 on the pinion members 122 and also avoid contact with the rollers 132 giving such freedom of the belt to accommodate various movements. Moreover, the device is constructively simple and economical as against convention designs.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, to thereby enable others skilled in the art to best utilize the present disclosure and various embodiments with various modifications as are suited to the particular use contemplated. It is understood that various omission and substitutions of equivalents are contemplated as circumstance may suggest or render expedient, but such are intended to cover the application or implementation without departing from the spirit or scope of the claims of the present disclosure.

### REFERENCE NUMERAL LIST

- 10: Omnidirectional treading system
- 100, 200: Omnidirectional moving device, device
- 110: Chassis member
- 111: Platform
- 112, 113: Parallel sides
- 114: Protrusions
- 120, 150: Treading members
- 122: Pinion members
- 124a, 124b: First and second ends
- 124: Protruding elements
- 124r: Rotational axis
- 126: Interacting member
- 128: U-shaped groove
- 130: Belt member
- 132: Rollers
- 132a: Axes of rollers
- 134: Engaging members
- 136: Complementary interacting member
- 140: Wheel arrangement
- 144: Smaller wheels
- 144a: Axes of the smaller wheels
- 146: Bigger wheel
- 146a: Axis of the bigger wheels
- 160: Connecting members
- 162: Worm gear
- 180: Extension member
- 170, 190: Motor
- D1, D2, and D3: First, second and third directions
- R1, R2: Direction of rotations

## Claims

1. An omnidirectional moving device (100), comprising:
a chassis member (110);
at least a pair of treading members (120) disposed parallel in spaced-apart manner carrying the chassis member (110) there between, each of the treading member (120) adapted to be moved in same or opposite direction; and
a wheel arrangement (140) coupled to the chassis (110) between the pair of treading members (120) in perpendicular relation to the pair of treading members (120), the wheel arrangement (140), independently or dependently with the pair of treading members (120), enables the omnidirectional moving device (100) to be moved in a first direction (D1),
wherein each of the treading member (120) when moving in same direction, enables the wheel arrangement (140) to move in the same direction as thereof, so as to enable the omnidirectional moving device (100) to be moved in a second direction (D2), and,
wherein, each of the treading members (120) when adapted to be moved in opposite directions, the wheel arrangement (140) swings at a position thereof so as to enable the omnidirectional moving device (100) to be moved in a third direction (D3), while the omnidirectional moving device (100) is simultaneously moving in the first (D1) or second (D2) direction.

2. The omnidirectional moving device (100) as claimed in claim 1, wherein each of the treading member (120) comprises:
a pair of pinion members (122) spaced-apartly disposed from each other, each of the pinion member (122) having a plurality of protruding elements (124) in which each has an interacting member (126), and
a belt member (130) disposed over the spaced apart pinion members (122) and adapted to rotate with the rotation of the pair of pinion members (122), the belt member (130) having a plurality of rollers (132) and a plurality of engaging members (134) configured such that each of the engaging member (134) is disposed between the two rollers (132) transversely to axes thereof, wherein each engaging member (134) comprises a complementary interacting member (136) to engage with the interacting member (126) so as to restrict the belt member (130) movement over the pair of pinion members (122).

3. The omnidirectional moving device (100) as claimed in claim 2, wherein the wheel arrangement (140) is adapted to rotate along its axis enabling the rollers (132) of each of the pair of treading members (120) to be rotated along their respective axis so as to move the omnidirectional moving device (100) in the first direction (D1).

4. The omnidirectional moving device (100) as claimed in claim 2, wherein the wheel arrangement (140) is adapted to rotate along its axis enabling the omnidirectional moving device (100) to be moved in the first direction (D1).

5. The omnidirectional moving device (100) as claimed in claim 2, wherein each of the plurality of protruding elements (124) diverges away from a rotational axis (124r) of a pinion member (122) configuring a semi-arced shape having first (124a) and second (124b) ends, wherein each of the first and second ends (124a), (124b) comprises the interacting member (126).

6. The omnidirectional moving device (100) as claimed in claim 5, wherein each of the plurality of protruding elements (124) with the semi-arced shape combines to form the pinion members (122) having a U-shaped groove (128) in which the belt member (130) is disposed.

7. The omnidirectional moving device (100) as claimed in claim 2, further comprising an extension member (180) disposed between the two rollers (132) along the axis of the rotation thereof and supporting the engaging member (134) disposed between the two rollers (132) thereon.

8. The omnidirectional moving device (100) as claimed in claim 2, wherein each of the engaging members (134) comprises two distal ends, each having the complementary interacting member (136) to engage with the respective interacting member (126).

9. The omnidirectional moving device (100) as claimed in claim 1, wherein the wheel arrangement (140) comprises a plurality of smaller wheel members (144) disposed along periphery of the wheel arrangement (140) such that axes of the rotations of each of the smaller wheel members (144) is transversal to the axis of the rotation of the wheel arrangement (140).

10. The omnidirectional moving device (100) as claimed in claim 1, wherein each of the pair of treading members (120) is motor operated, wherein the motor operated each of the pair of treading members (120) is attached to a motor via one of a worm gears or directly in the same axis joint with an axis coupling.

11. The omnidirectional device (100) as claimed in claim 1, wherein the wheel arrangement (140) is motor operated.

12. The omnidirectional moving device (100) as claimed in claim 1, wherein the chassis member (110) is connected to the each of the treading member (120) along the pinion members (122) via connecting members (160).

13. The omnidirectional moving device (100) as claimed in claim 1 further comprising a pair of treading members (150) disposed parallel in spaced-apart manner carrying the chassis member (110) therebetween, wherein the pair of treading members (150) disposed perpendicular to the pair of treading member (120).

14. The omnidirectional moving device (100) as claimed in claim 13, wherein each of the pair of treading members (150) is motor operated.

15. The omnidirectional moving device (100) as claimed in claim 13, wherein each of the treading members (150) is adapted to be moved in same or opposite direction.

16. An omnidirectional treading system (10), the omnidirectional treading system (10) capable of being incorporated to configure and an omnidirectional moving device (100), the omnidirectional treading system (10), comprising:
at least a pair of treading members (120) disposed parallel in spaced-apart manner, each of the treading member (120) adapted to be moved in same or opposite direction, and each of the treading member (120) having:
a pair of pinion members (122) spaced-apartly disposed from each other, each of the pinion member (122) having a plurality of protruding elements (124) in which each has an interacting member (126), and
a belt member (130) disposed over the spaced apart pinion members (122) and adapted to rotate with the rotation of the pair of pinion members (122), the belt member (130) having a plurality of rollers (132) and a plurality of engaging members (134) configured such that each of the engaging member (134) is disposed between the two rollers (132) transversely to axes thereof, wherein each engaging member (134) comprises a complementary interacting member (136) to engage with the interacting member (126) so as to restrict the belt member (130) movement over the pair of pinion members (122); and
a wheel arrangement (140) disposed between the pair of treading members (120) in perpendicular relation to the pair of treading members (120), the wheel arrangement (140), independently or dependently with the pair of treading members (120), enables a movement in a first direction (D1),
wherein each of the treading member (120) when moving in same direction, enables the wheel arrangement (140) to move in the same direction as thereof, so as to enable a movement in a second direction (D2), and,
wherein, each of the treading members (120) when adapted to be moved in opposite directions, the wheel arrangement (140) swings at a position thereof so as to enable a movement in a third direction (D3), while simultaneously moving in the first (D1) or second (D2) direction.
